# FASCICULE DE BREVET EUROPEEN

(11) **EP 2 977 323 B1**
(45) Date de publication et mention de la délivrance du brevet: **25.03.2020**
(21) Numéro de dépôt: 15177172.2
(22) Date de dépôt: 16.07.2015
(51) Int. Cl.: B64G 1/22, B65H 75/34

(54) **STRUCTURE DÉPLOYABLE À MÈTRE-RUBAN**
ENTFALTBARE STRUKTUR MIT FEDERBAND
DEPLOYABLE STRUCTURE WITH TAPE-SPRING

(30) Priorité: 25.07.2014 FR 1401712
(43) Date de publication de la demande: 27.01.2016
(73) Titulaire: THALES, 92400 Courbevoie (FR)
(72) Inventeur: BAUDASSE, Yannick, 06156 CANNES LA BOCCA CEDEX (FR); VEZAIN, Stéphane, 06156 CANNES LA BOCCA CEDEX (FR); GUINOT, François, 06156 CANNES LA BOCCA CEDEX (FR)
(74) Mandataire: Collet, Alain

(56) Documents cités:
- FR-A- 1 591 682
- FR-A1- 2 998 876
- GB-A- 2 216 870
- US-A- 4 506 446
- US-B1- 8 683 755

## Description

La présente invention concerne une structure déployable à mètre-ruban pour une structure flexible, enroulable et déployable. Elle s'applique notamment au domaine des équipements spatiaux qui doivent être déployés en orbite et plus particulièrement aux équipements spatiaux pour satellites, tels que des antennes, des générateurs solaires, des écrans thermiques, des baffles ou des télescopes.

Les structures déployables dans l'espace, de type générateur solaire par exemple, sont généralement constituées de panneaux rigides articulés entre eux, ces panneaux étant, en position stockée, empilés les uns au-dessus des autres. Ces structures ont l'avantage d'avoir une cinématique maîtrisée mais présentent le désavantage d'une masse surfacique et d'une inertie importantes. En outre, les structures rigides occupent, en position stockée, un encombrement important sous la coiffe d'un lanceur. L'espace alloué aux structures déployables, sous la coiffe d'un lanceur, étant limité, il est important de réduire l'encombrement de ces structures déployables lorsqu'elles sont en position stockée de façon à en optimiser la surface en position déployée.

Il existe des structures planes flexibles déployables comportant une toile flexible et des mètres-ruban (aussi connus dans la littérature anglo-saxonne sous le terme tape-spring) fixés sur un même plan de la toile. En position stockée, la toile et les mètres-ruban sont enroulés autour d'un mandrin. Le déploiement de la structure plane flexible est assuré de manière autonome par le déroulement spontané des mètres-ruban lorsque le mandrin est libre en rotation.

En effet, les mètres-ruban sont connus dans le domaine spatial comme étant des rubans flexibles ayant une section en arc de cercle dont le rayon de courbure est convexe sur une première face et concave sur une deuxième face, ces rubans étant aptes à passer de l'état enroulé à l'état déroulé essentiellement grâce à leur énergie élastique propre. Il existe différents types de ruban ayant des propriétés propres. Les rubans monostables possèdent une position naturelle déployée et nécessitent un maintien en position stockée. Les mètres-ruban monostables ont donc une tendance naturelle à se déployer pour se retrouver dans leur état déroulé. Le déploiement des rubans monostables est souvent anarchique et incontrôlé. Les rubans bistables possèdent deux positions naturelles (position stockée et position déployée) et ne nécessitent pas de maintien en position stockée lorsque la section est totalement applatie. Leur déploiement est linéaire et contrôlé. Cependant, dans tous les cas, lorsque le déploiement est déclenché, celui-ci peut être violent et générateur de chocs, c'est-à-dire que tout le mètre-ruban peut avoir tendance à se remettre droit simultanément, sur toute sa longueur, ce qui pose un risque d'endommagement des éléments environnants ou des éléments fixés sur le mètre-ruban tels que une membrane flexible, un instrument, une antenne... Les mètres-ruban classiques peuvent ainsi présenter des difficultés en termes de contrôle de leur déploiement. Afin de réguler la vitesse de déploiement de ce type de structure, plusieurs méthodes peuvent être utilisées. On peut citer par exemple une régulation par motoréducteur électrique comme décrit dans la demande de brevet FR12/03300 ou une régulation thermique par utilisation de mètres-ruban hybrides comme décrit dans les brevets FR 0803986 et US 7856735.

En outre, les mètres-ruban n'ont pas la même raideur suivant l'axe de contrainte. Un effort F appliqué sur la face convexe du mètre-ruban va avoir tendance à faire fléchir le mètre-ruban alors que le même effort appliqué sur la face concave n'aura aucun effet, ce qui pose un problème d'instabilité de la structure flexible dans son état déployé. Pour résoudre ce problème de stabilité de l'état déployé, il est alors nécessaire de maintenir le mètre-ruban en position déployée par un dispositif de maintien supplémentaire ou de sur-dimensionner le mètre-ruban pour qu'il reste stable sous les efforts orbitaux, quels que soient leurs sens d'application.

Ainsi, en configuration stockée, le mètre-ruban doit être le plus compact possible, c'est-à-dire avoir un rayon d'enroulement le plus faible possible. Ce paramètre est donné par les caractéristiques physiques du ruban, généralement, le rayon d'enroulement est sensiblement égal à celui de leur rayon de courbure. Dans le cas d'un ruban composite, il peut être modifié en changeant l'empilage des plis et/ou le sens des fibres. En configuration déployée, la meilleure rigidité possible est recherchée, ce qui signifie une section la plus grande et la plus fermée possible associée à un encastrement de l'extrémité du mètre-ruban le plus important possible.
FR 1 591 682, US 8,683,755 B1 et FR 2 998 876 montrent une structure déployable pour un satellite.

L'invention vise à pallier tout ou partie des problèmes cités plus haut en proposant une structure déployable pour une structure flexible, enroulable et déployable, présentant l'avantage d'être peu encombrante, simple à réaliser, présentant une optimisation du volume de la structure déployable lorsqu'elle est stockée sous la coiffe d'un lanceur, permettant la maîtrise du déploiement et une capacité de reploiement et permettant une rigidité et une stabilité de la structure lorsqu'elle est déployée.
L'invention est définie dans les revendications.

A cet effet, l'invention a pour objet une structure déployable comprenant :
- un support,
- un mètre-ruban fixé au support, apte à passer d'une configuration enroulée autour d'un axe Z à une configuration déployée,
   caractérisée en ce qu'elle comprend en outre
- un bras mobile en rotation par rapport au support autour de l'axe Z, apte à former un premier contact avec le mètre-ruban de manière à contrôler le déploiement du mètre-ruban.

Selon l'invention, le mètre-ruban ayant deux extrémités, le mètre-ruban est fixé entre ses deux extrémités à un point de fixation sur le support, le bras est apte à former un second contact avec le mètre-ruban de manière à contrôler le déploiement du mètre-ruban, une première extrémité est apte à se déployer par rapport au point de fixation selon un premier axe perpendiculaire à l'axe Z dans un premier sens, une seconde extrémité est apte à se déplier selon un second axe perpendiculaire à l'axe Z dans un second sens différent du premier sens.

Les deux extrémités sont aptes à se déployer simultanément.

Selon un autre mode de réalisation, la structure déployable selon l'invention peut comprendre en outre un mandrin et un arbre sensiblement parallèle à l'axe Z, le mandrin est fixé sur l'arbre et le mètre-ruban est enroulé autour du mandrin.

Selon un autre mode de réalisation, le bras porte deux galets, les galets étant en contact avec le mètre-ruban et les galets sont aptes à guider le mètre-ruban.

Avantageusement, les galets peuvent être des galets chauffants, aptes à chauffer localement le mètre-ruban.

Avantageusement, la structure déployable peut comprendre en outre un moyen de verrouillage du degré de liberté en rotation autour de l'axe Z du bras.

Avantageusement, le moyen de verrouillage du degré de liberté en rotation autour de l'axe Z peut être un encastrement d'une portion de mètre-ruban dans l'arbre.

Selon un autre mode de réalisation, la structure déployable selon l'invention peut comprendre deux mètres-ruban secondaires comportant chacun deux extrémités, une première extrémité d'un des deux mètres-ruban secondaires est fixée à distance d'une première extrémité du mètre-ruban et une seconde extrémité du mètre-ruban secondaire est fixée à une extrémité du bras.

Avantageusement, les mètres-ruban secondaires peuvent être des lames planes.

Avantageusement, la structure peut comprendre en outre un mât articulé déployable fixé sur une plateforme d'un satellite par l'intermédiaire d'un moteur d'entraînement en rotation.

L'invention concerne aussi un satellite comprenant au moins une structure déployable.

L'invention sera mieux comprise et d'autres avantages apparaîtront à la lecture de la description détaillée d'un mode de réalisation donné à titre d'exemple, description illustrée par le dessin joint dans lequel :
- les figures 1a, 1b et 1c représentent trois schémas, en coupe dans un plan perpendiculaire à l'axe Z, d'une structure déployable selon un exemple non revendiqué,
- les figures 2a, 2b et 2c représentent une structure déployable selon une vue en coupe de la structure déployable selon l'invention,
- les figures 3a et 3b représentent une structure déployable selon une vue en coupe de la structure déployable selon un exemple non revendiqué,
- la figure 4a représente une vue isométrique de la structure déployable selon un premier mode de réalisation,
- la figure 4b représente une vue en coupe de la structure déployable selon un premier mode de réalisation,
- les figures 5a, 5b et 5c représentent une structure déployable en position semi-déployée et en position déployée ainsi qu'une coupe de la structure déployable selon un exemple non revendiqué,
- la figure 6 représente une coupe de la structure déployable selon un mode de réalisation,
- la figure 7 représente un moyen de verrouillage du mètre-ruban en position déployée,
- la figure 8 illustre en vue semi-transparente le moyen de verrouillage du mètre-ruban sur le mandrin,
- la figure 9 représente un autre moyen de rigidification de l'encastrement du mètre-ruban,
- la figure 10 représente un moyen de flambage automatique des mètres-ruban secondaires,
- la figure 11 représente schématiquement un satellite comprenant au moins une structure déployable selon l'invention.

Par souci de clarté, les mêmes éléments porteront les mêmes repères dans les différentes figures.

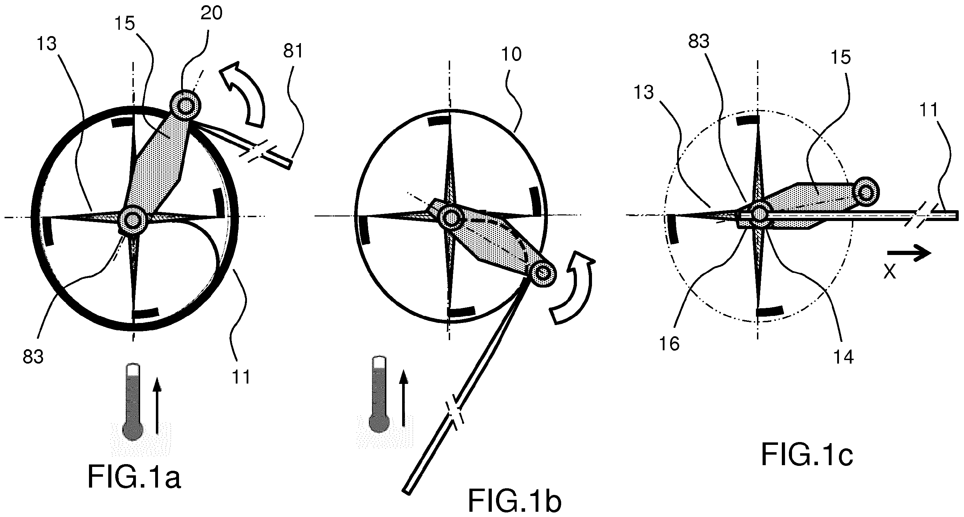

Les figures 1a, 1b et 1c représentent trois schémas en coupe dans un plan perpendiculaire à un axe Z, de la structure déployable 10 selon un exemple non revendiqué. La structure déployable 10 comprend un support 16 et un mètre-ruban 11 fixé au support 16, apte à passer d'une configuration enroulée autour d'un axe Z à une configuration déployée selon un axe déplié X. La structure 10 comprend en outre un bras 15 mobile en rotation par rapport au support 16 autour de l'axe Z, apte à former un premier contact avec le mètre-ruban 11 de manière à contrôler le déploiement du mètre-ruban 11. Le premier contact peut être un contact ponctuel ou bien un contact longitudinal selon un axe sensiblement parallèle à l'axe Z, le long de toute la largeur du mètre-ruban 11 ou de seulement une partie de la largeur du mètre-ruban 11. En effet, sans ce contact, le mètre-ruban pourrait se déployer de manière incontrôlée selon un axe quelconque. Ce contact peut aisément être remplacé par au moins un galet 20, portés par le bras 15. Ce galet 20 peut disposer d'un degré de liberté en rotation autour d'un axe parallèle à l'axe Z, lui permettant d'être en rotation à la surface du mètre-ruban 11. Le bras 15 permet de contrôler le déploiement du mètre-ruban grâce à un couple résistant plus ou moins important suivant le type de régulation choisi (hybride ou électrique*). Le contact est avantageusement positionné à proximité de la partie enroulée du mètre-ruban 11, afin de contribuer au maintien du mètre-ruban 11 dans sa partie enroulée.

La structure déployable 10 peut comprendre en outre un mandrin 13 et un arbre 14 sensiblement parallèle à l'axe Z. Le mandrin 13 peut être fixé sur l'arbre 14 et le mètre-ruban 11 peut être enroulé autour du mandrin 13. Le support 16 peut être lié à l'arbre 14. La présence du mandrin 13 n'est pas indispensable. Néanmoins, cette configuration permet au mètre-ruban 11 d'être positionné et bien guidé entre le mandrin 13 et le galet 20 .

Le mètre-ruban 11 comprend deux extrémités 81, 83. Le mètre-ruban 11 est fixé au niveau de son extrémité 83, à l'arbre 14 au niveau du support 16. Le mètre-ruban 11 est apte à se déployer selon une direction parallèle à un axe X, perpendiculaire à l'axe Z. L'enroulement du mètre-ruban se fait sur un diamètre correspondant au diamètre du mandrin 13. Le schéma 1c illustre la structure déployable 10 en position complètement déployée. Le mètre-ruban 11 est intégralement déployé selon l'axe X et toujours fixé à son extrémité à l'arbre 14.

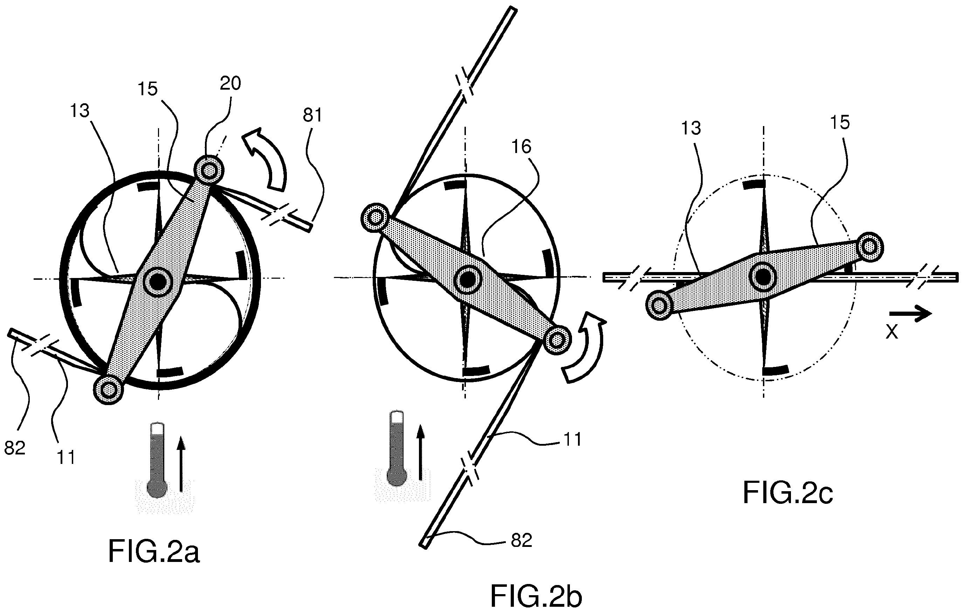

Les figures 2a, 2b et 2c représentent trois schémas en coupe dans un plan perpendiculaire à un axe Z, de la structure déployable 10 selon l'invention. La structure déployable 10 comprend au moins un mètre-ruban 11 ayant un axe de déploiement et de reploiement sensiblement parallèle à un axe déplié X et un mandrin d'enroulement 13 porté par un arbre 14 selon l'axe Z perpendiculaire à l'axe X. Le mètre-ruban 11 comprend deux extrémités 81, 82. Le mètre-ruban 11 est fixé entre ses deux extrémités 81, 82 à un point de fixation au niveau du support 16, (préférentiellement au centre du mètre-ruban 11), sur l'arbre 14. Le bras 15 est apte à former un second contact avec le mètre-ruban 11 selon un axe sensiblement parallèle à l'axe Z, de manière à guider le mètre-ruban 11 et contrôler son déploiement, une première extrémité 81 est apte à se déployer par rapport au point de fixation selon un premier axe déplié X perpendiculaire à l'axe Z dans un premier sens, une seconde extrémité 82 est apte à se déplier selon un second axe perpendiculaire à l'axe Z dans un second sens différent du premier sens. Dans certaines configurations, le second sens peut être opposé au premier sens.

Le mètre-ruban 11 peut être enroulé autour du mandrin 13 lié physiquement à l'arbre 14. Les deux extrémités 81, 82 sont aptes à se déployer par rapport au point de fixation 16 chacune selon des directions parallèles à l'axe X et diamétralement opposées. Ainsi, le stockage des deux extrémités 81 et 82 du mètre-ruban 12 est réalisé par un enroulement dans un même sens. Cette configuration permet d'obtenir un enroulement d'un mètre-ruban sur un diamètre correspondant au diamètre du mandrin 13. Cette configuration est donc optimisée pour le stockage puisqu'elle n'est pas très encombrante et permet un déroulement optimisé puisque l'on déploie ou reploie simultanément plusieurs longueur de rubans.

Par ailleurs, les deux extrémités 81, 82 sont aptes à se déployer simultanément.

Le schéma 2c illustre la structure déployable 10 en position complètement déployée. Le mètre-ruban 11 est intégralement déployé selon l'axe X et toujours fixé en son centre sur l'interface 16.

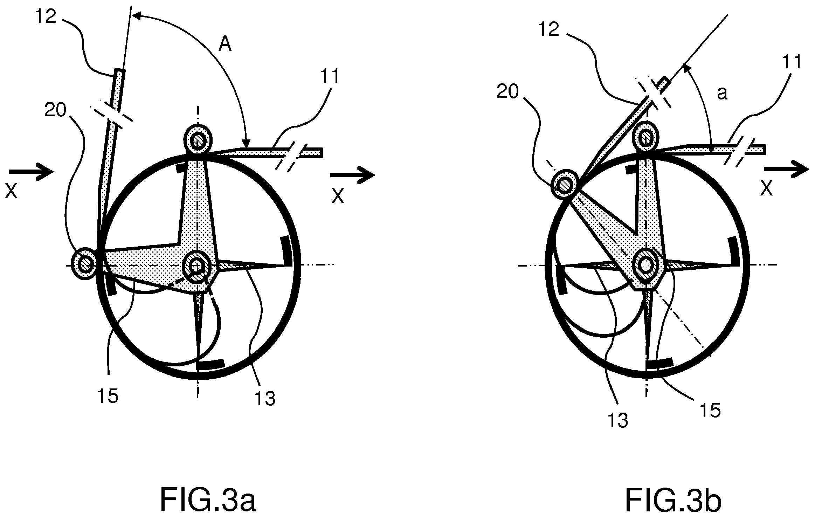

La figure 3 représente deux schémas annotés respectivement 3a et 3b, en coupe dans un plan perpendiculaire à un axe Z, de la structure déployable 10 selon un exemple non revendiqué. La structure déployable 10 à mètre-ruban pour une structure flexible, enroulable et déployable, comprend au moins deux mètres-ruban 11 et 12 ayant chacun un axe de déploiement et de reploiement ayant un angle quelconque par rapport à l'axe de déploiement X du premier mètre-ruban 11.

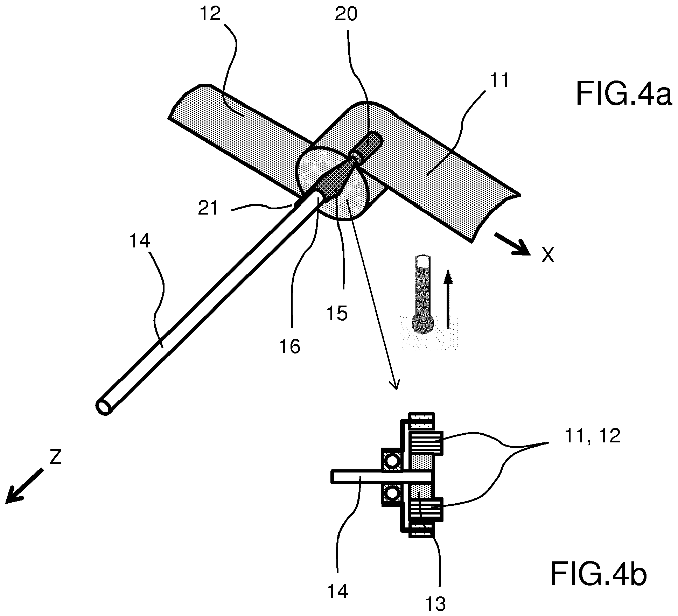

La figure 4a représente la structure déployable 10 en vue isométrique et la figure 4b représente une vue en coupe de la structure déployable. Le bras 15 est guidé en rotation autour de l'arbre 14 au niveau du support 16. Le bras 15 peut former deux contacts sensiblement parallèles à l'arbre 14 et pouvant être symétriques entre eux par rapport à l'arbre 14, le bras étant apte à et contrôler le déploiement du mètre-ruban 11.

Sur la figure 4b, la structure déployable 10 comprend en outre au moins deux galets 20, 21 portés par le bras 15. Les galets 20, 21 sont en contact avec le mètre-ruban 11. Le bras 15 dispose d'un degré de liberté en rotation autour de l'axe Z. Les galets 20, 21 sont aptes à guider le mètre-ruban 11. Les deux galets 20, 21 permettent notamment d'assurer un déroulement correct et synchronisé du mètre-ruban 11 autour du mandrin 13 et permettent également, si le bras 15 est motorisé, de pouvoir reployer le mètre-ruban au sol ou en vol, par exemple quand la structure flexible est montée sur un satellite. De plus, les galets 20, 21 permettent de limiter le frottement entre le bras 15 et le mètre-ruban 11.

L'invention peut s'appliquer aux mètres-ruban hybrides, constitués d'une première structure motrice (par exemple en fibre de carbone) qui permet le déploiement du mètre-ruban, et d'une partie régulatrice (thermoélastique ou en un matériau ayant une température de transformation notablement inférieure à celle du ruban principal) qui favorise ou limite le déploiement en fonction de la température qui lui est appliquée. En utilisant un phénomène naturel de changement de viscosité d'un matériau par la température une bonne fiabilité et une reproductibilité de régulation du déploiement sont garanties.

On peut noter que dans le cas de l'utilisation de mètres-ruban hybrides, le reploiement est impossible par la simple force du mètre-ruban car le mètre-ruban n'est moteur que dans le sens de déploiement. Pour permettre un reploiement du mètre-ruban, il faut y adjoindre un motoréducteur électrique. De ce fait, si on souhaite un déploiement monocoup, il est possible d'avoir une régulation et/ou motorisation hybride ou électrique. Si des déploiements multiples du mètre-ruban sont à prévoir, la régulation et/ou motorisation devra alors être électrique.

Pour réguler le déploiement du mètre-ruban 11, dans le cas de l'utilisation de mètres-ruban hybrides, il est possible de chauffer le mandrin 13. Avantageusement, les galets 20, 21 peuvent être des galets chauffants. Les galets chauffants permettent de réchauffer localement en deux points, au niveau de leurs ancrages respectifs, les mètres-ruban, provoquant ainsi leur déploiement et également la rotation du mandrin 13 qui peut donc chauffer la section de mètre-ruban alors mise en contact avec les galets 20, 21, comme représenté schématiquement sur la figure 1b, les flèches indiquant la rotation autour de l'axe Z. Le réchauffement local par les galets chauffants permet d'obtenir un déploiement régulé de la structure. De plus, comme le réchauffement est local, cette configuration est énergétiquement économique puisqu'il n'est pas nécessaire de rechauffer l'ensemble du mètre-ruban et/ou du mandrin 13. Cette caractéristique est particulièrement intéressante pour une utilisation sur satellite.

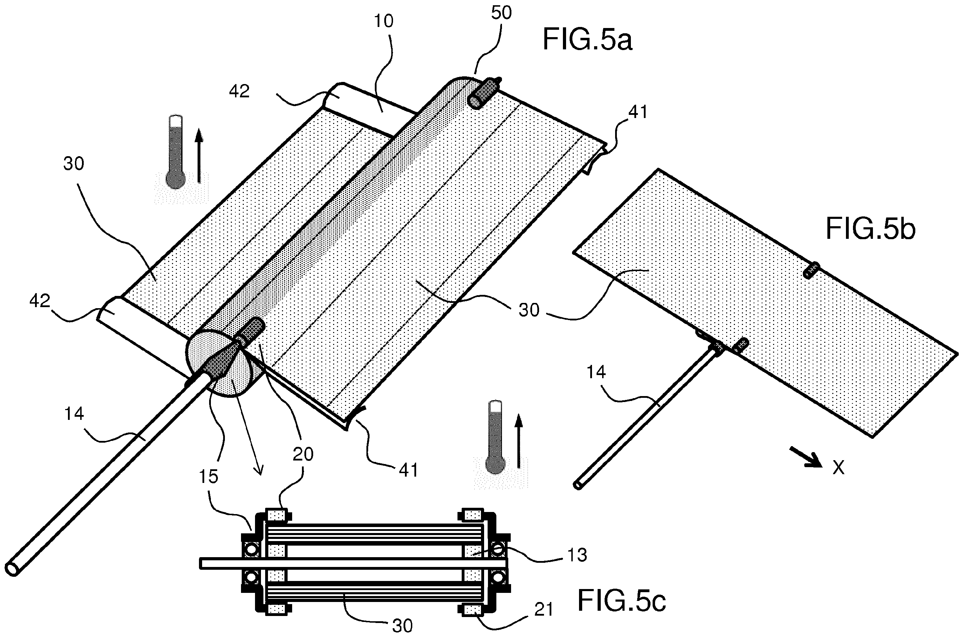

Les figures 5a, 5b et 5c représentent une structure déployable 50 en position semi-déployée et en position déployée ainsi qu'une coupe de la structure déployable 50 comportant deux structures déployables 10 selon un exemple non revendiqué. La structure déployable 50 peut comprendre au moins une membrane flexible 30. Sur les figures 5a, 5b, 5c, les structures déployables 10 comprennent respectivement deux mètres-ruban 41 et 42. La membrane flexible 30 peut être destinée à supporter des éléments à déployer comme par exemple des cellules solaires, des cellules métallisées pour la réflexion des ondes radio, des éléments isolants pour réaliser un écran thermique ou optique, ou tout autre dispositif. La membrane flexible 30 est fixée sur les mètres-ruban 41, 42. La membrane flexible 30 peut être rigidifiée par des lattes transversales fixées elles-mêmes aux mètres ruban, par exemple, par collage, par rivetage, agrafage ou couture.

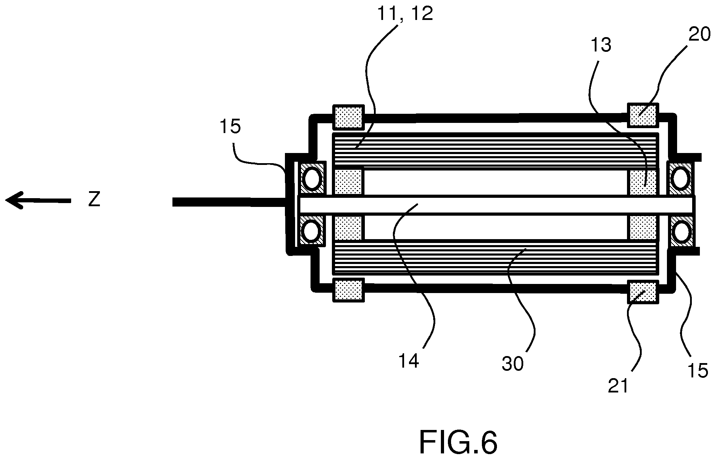

La figure 5c représente une coupe de la structure déployable 50 comportant deux structures déployables 10, et d'une membrane flexible 30. Sur la figure 5c, le mandrin 13 est fixé sur l'arbre 14. Le bras 15 dispose d'un degré de liberté en rotation autour de l'axe Z. Cet exemple nécessite un système d'alimentation électrique tournant, de type collecteur ou câble spiralé pour alimenter les galets chauffants. Il est plus adapté à un systeme de mandrin 13 chauffant fixe par rapport à l'arbre 14 et n'utilisant pas de collecteur. Il est également possible de considérer un autre mode de réalisation, comme présenté sur la figure 6.

Il est à noter que la structure déployable 50 est représentée avec deux mètres-ruban. Néanmoins, il est possible d'appliquer l'invention à une structure déployable avec plus de deux mètres-ruban, par exemple trois ou quatre, notamment pour obtenir ainsi un meilleur support de la membrane flexible ou dans le cas où la membrane flexible occupe une surface très importante.

La figure 6 représente une coupe de la structure déployable 50 comportant deux structures déployables selon un premier mode de réalisation. Sur la figure 6, le mandrin 13 est fixé sur l'arbre 14 et tous deux disposent d'un degré de liberté en rotation autour de l'axe Z. Le bras 15 est fixe.

Ce mode de réalisation ne nécessite pas d'un système d'alimentation électrique tournant, de type collecteur ou câble spiralé pour alimenter les galets chauffants. Dans ce mode de réalisation, il n'y a plus besoin de compenser les tours de mètres-ruban. Néanmoins, il est nécessaire de verrouiller la rotation de chaque mètre-ruban en fin de déploiement de la structure déployable 10.

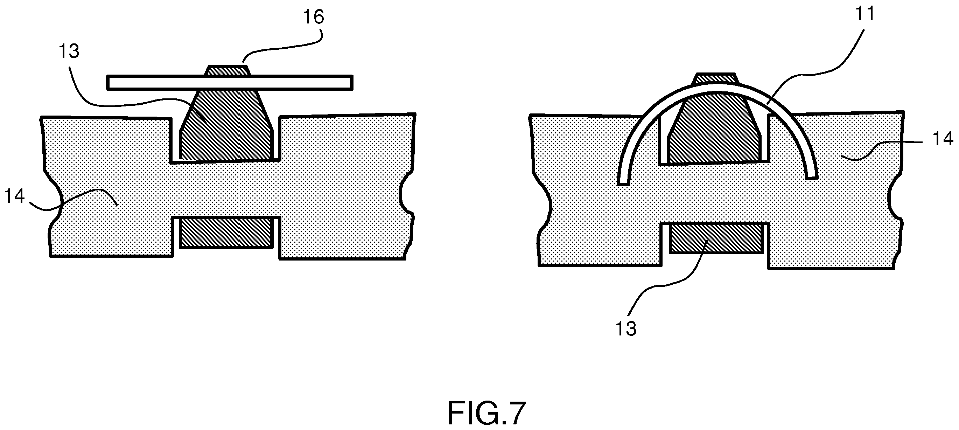

La figure 7 représente un moyen de verrouillage du degré de liberté en rotation autour de l'axe Z du mètre-ruban en position déployée. Le moyen de verrouillage du degré de liberté en rotation autour de l'axe Z est un encastrement d'une portion de mètre-ruban dans l'arbre 14. Au niveau du mandrin 13, le mètre-ruban 11 peut reprendre sa position initiale avec une forme légèrement concave de la face fixée au mandrin 13 qui s'encastre alors dans l'arbre 14. Autrement dit, le mètre-ruban 11 s'ajuste sur l'arbre 14 en forme de clavette. La rotation selon l'axe Z du mètre-ruban est alors verrouillée.

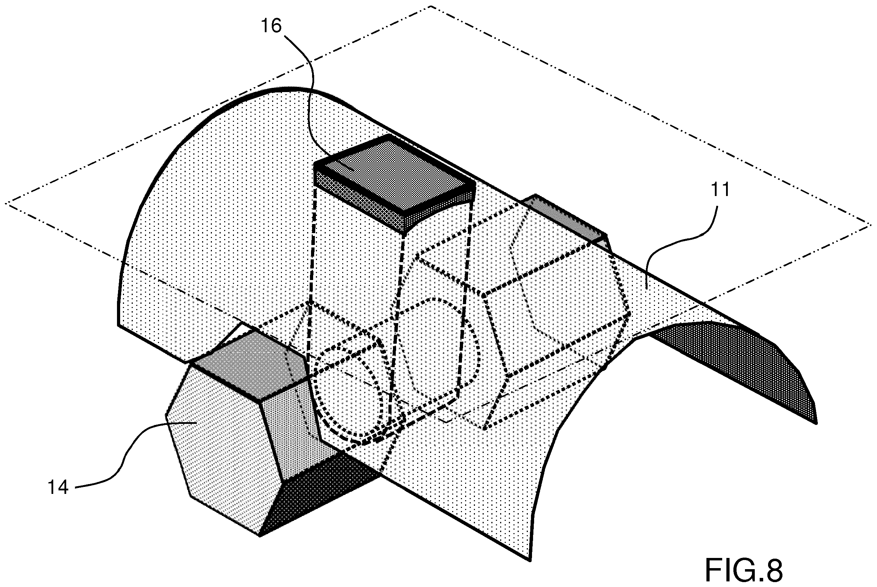

La figure 8 illustre en vue semi-transparente isometrique le moyen de verrouillage du mètre-ruban sur le mandrin 13 avec en détail la courbure du mètre-ruban qui s'encastre au niveau de l'arbre 14.

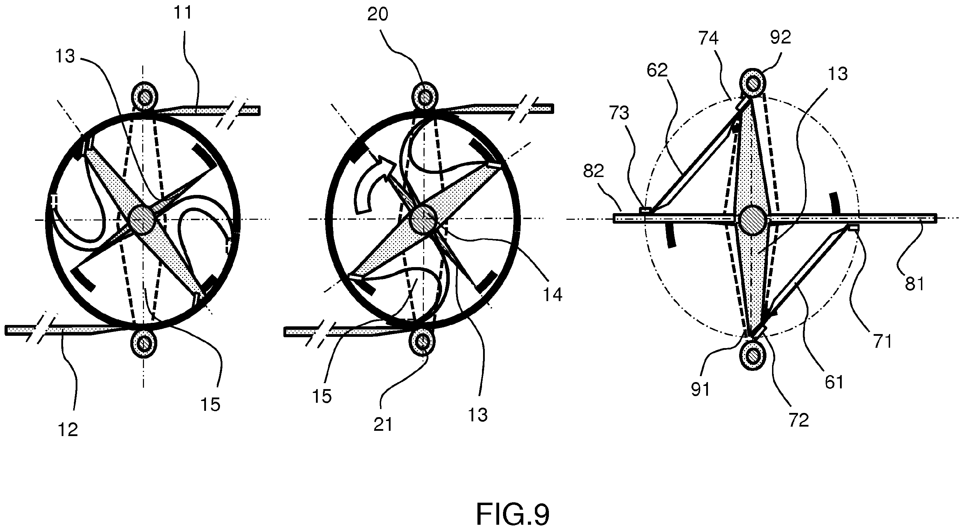

La figure 9 représente un autre moyen de rigidification de l'encastrement du mètre-ruban. Cette configuration est similaire à celle proposée dans la figure 8 avec un bras 15 portant les galets 20, 21 fixe et un arbre 14, un mandrin 13 et des mètres-ruban 11 et 12 mobiles en rotation autour de l'axe Z.

Le mètre-ruban 11 et le mandrin 13 comportent chacun deux extrémités. La structure déployable 10 comprend deux mètres-ruban secondaires 61, 62 comportant chacun deux extrémités, une première extrémité 71 d'un des deux mètres-ruban secondaires 61 est fixée à distance d'une première extrémité 81 du mètre-ruban 11. Une seconde extrémité 72 du mètre-ruban secondaire 61 est fixée à une extrémité 91 du mandrin 13. De même, une première extrémité 73 du deuxième mètre-ruban secondaire 62 est fixée à distance d'une deuxième extrémité 82 du mètre-ruban 11. Une seconde extrémité 74 du mètre-ruban secondaire 62 est fixée à une extrémité 92 du mandrin 13. Chaque ensemble constitué par une portion de mètre-ruban, une portion de mandrin et un mètre-ruban secondaire forme en position déployée une structure triangulée offrant une excellente rigidité au mètre-ruban déployé.

Sur la figure 9, le bras 15 est représenté en traits pointillés, mais il est bien évident qu'il est lié aux galets chauffants 20, 21 pour permettre un bon guidage du mètre-ruban et le déploiement du mètre-ruban par réchauffage local comme expliqué ci-dessus. Ainsi, le déploiement du mètre-ruban peut être régulé et contrôlé.

Les mètres-ruban secondaires peuvent être des mètres-ruban à section convexe ou des lames planes.

Un mètre-ruban en configuration déployée offre une bonne résistance à la traction mais également à la compression (dans une certaine limite). Il permet donc d'être utilisé seul comme « jambe de force » tel que décrit précédemment. Il offre par contre une moins bonne capacité de stockage qu'une bande du fait de cet encastrement plus encombrant.

Afin de gagner en encombrement en position stockée, et faciliter l'enroulement, il peut donc être envisagé d'utiliser des câbles, lames planes ou bandes flexibles en remplacement des mètres-ruban. Cependant ceux-ci ne travaillent qu'en traction uniquement. Il faut donc que ceux-ci travaillent par couple et soient mis en opposition (comme représenté sur la figure 9) en utilisant la raideur du mètre-ruban principal. En effet, lorsqu'on applique un couple sur le mètre-ruban principal, une bande flexible retient l'effort, si on applique un couple dans l'autre sens, c'est la bande flexible opposée qui agit.

Les mètres-ruban secondaires constituent un système de triangulation sur le mètre-ruban 11.

Lorsque l'on souhaite reployer la structure flexible 30 dans la configuration présentée sur la figure 9, il suffit de faire flamber le ou les mètres-ruban secondaires pour obtenir l'enroulement initial en appliquant un effort au centre du ruban 61, normal à l'axe de ce dernier.

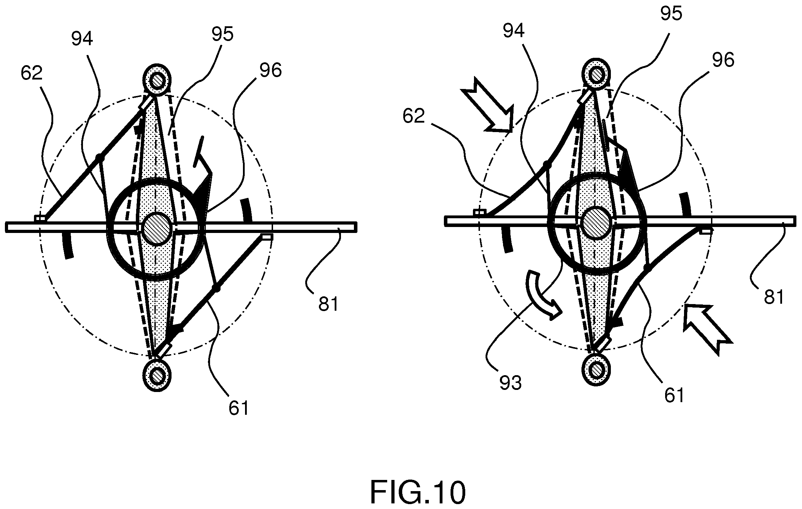

La figure 10 représente un moyen 96 de flambage automatique des mètres-ruban secondaires 61, 62. L'effort de flambage peut être obtenu par l'intermédiaire d'un moteur permettant le réenroulement de la structure. Le moteur est lié à une poulie 93 entrainant, via des câbles ou bande 94, les mètres-ruban 61, 62. Lorsque la poulie 93, via une butée 95, vient en contact avec le mandrin 13, le moteur entraîne le mandrin 13 afin de rembobiner la structure.

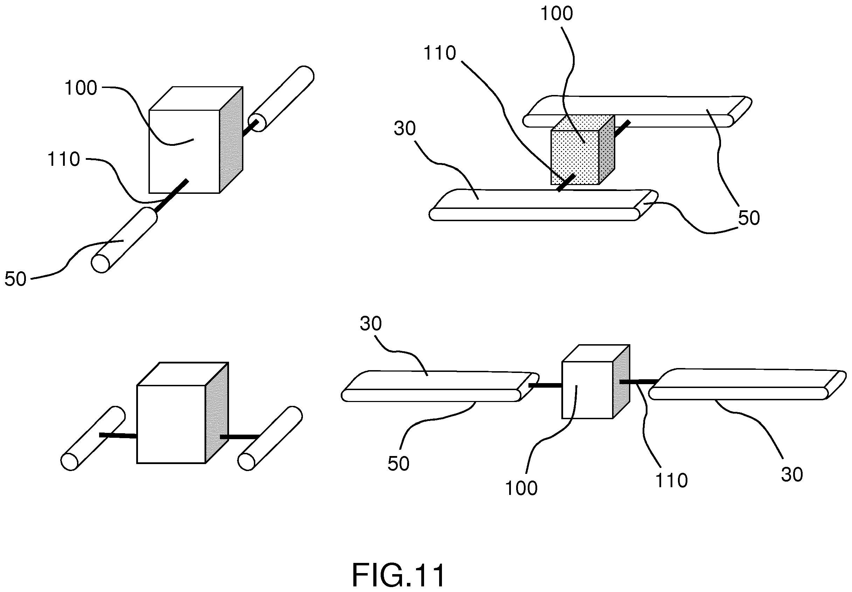

La figure 11 représente un satellite 100 comprenant au moins une structure déployable 50 équipée d'une membrane flexible 30 et d'au moins 2 structures déployables 10. La structure déployable 50 comprend en outre un mât articulé 110 déployable fixé sur une plateforme du satellite 100 par l'intermédiaire par exemple d'un moteur d'entraînement en rotation. Sur la figure 10, la membrane flexible 30 est complètement déployée. Le satellite 100 comprend une deuxième membrane flexible 30. Les deux structures déployables 50 sont positionnées de part et d'autre du satellite 100. La structure flexible 50 peut être positionnée en forme de T par rapport au satellite 100 (configuration représentée figure 2), c'est-à-dire que sa direction principale longitudinale est perpendiculaire au mât articulé 110. La structure flexible peut également être positionnée en forme de I (configuration représentée figure 1), par rapport au satellite 100, c'est-à-dire que sa direction principale longitudinale est dans le prolongement du mât articulé 110.

Généralement, en utilisation réelle, la structure déployable 50 n'est utilisée que pour un seul déploiement. Néanmoins de nouveaux besoins de mission apparaissent. Notamment le transfert ou le remorquage de satellite d'une orbite basse vers une orbite haute. Lors de l'accostage, pour le pilotage du véhicule de transfert, il faut le moins d'inertie possible, c'est-à-dire que la présence de structures déployables de grandes dimensions n'est pas favorable. Il faut éviter aussi toute interférence avec les satellites que l'on cherche à accoster. De ce fait, il est préférable d'enrouler les structures déployables. Quand le satellite est accroché, on peut de nouveau déployer la structure.

L'invention présente une simplicité d'assemblage, avec peu de pièces à assembler. Le déroulement du mètre-ruban est bien maîtrisé. En effet, le mètre-ruban peut être guidé par les galets 20, 21, et localement réchauffé dans le cas où les galets 20, 21 sont chauffants, permettant ainsi de réguler son déploiement.

Enfin, le gerbage peut être autonome car il est obtenu par la bi-stabilité du mètre-ruban (hybride ou non) avec ses deux positions stables (enroulée et déployée).

Cependant, l'invention peut également s'appliquer avec des mètres-ruban non hybrides ou non bistables.

Dans ce cas, la régulation du déploiement se fait par motoréducteur (qui retient le couple du mètre-ruban), en remplacement du couple (thermoplastique/galets chauffants).

## Revendications

1. Structure déployable (10) comprenant :
• un support (16),
• un mètre-ruban (11, 12) fixé au support (16), apte à passer d'une configuration enroulée autour d'un axe Z à une configuration déployée, le mètre-ruban ayant deux extrémités (81, 82), **caractérisée en ce qu'**elle comprend en outre
un bras (15) mobile en rotation par rapport au support (16) autour de l'axe Z, apte à former un premier contact avec le mètre-ruban (11, 12) de manière à contrôler le déploiement du mètre-ruban (11, 12), **en ce que** le mètre-ruban (11, 12) est fixé entre ses deux extrémités à un point de fixation sur le support (16),
**en ce que** le bras (15) est apte à former un second contact avec le mètre-ruban (11, 12) de manière à contrôler le déploiement du mètre-ruban (11, 12),
**en ce qu'**une première extrémité est apte à se déployer par rapport au point de fixation selon un premier axe perpendiculaire à l'axe Z dans un premier sens,
**en ce qu'**une seconde extrémité est apte à se déplier selon un second axe perpendiculaire à l'axe Z dans un second sens différent du premier sens,
et **en ce que** les deux extrémités sont aptes à se déployer simultanément.

2. Structure déployable (10) selon la revendication précédente, **caractérisée en ce qu'**elle comprend en outre un mandrin (13) et un arbre (14) sensiblement parallèle à l'axe Z, **en ce que** le mandrin (13) est fixé sur l'arbre (14), et **en ce que** le mètre-ruban (11, 12) est enroulé autour du mandrin (13).

3. Structure déployable (10) selon l'une des revendications précédentes, **caractérisée en ce que** le bras (15) porte deux galets (20, 21), les galets étant en contact avec le mètre-ruban (11) et **en ce que** les galets (20, 21) sont aptes à guider le mètre-ruban (11).

4. Structure déployable (10) selon la revendication 3, **caractérisée en ce que** les galets (20, 21) sont des galets chauffants, et **en ce que** les galets (20, 21) sont aptes à chauffer localement le mètre-ruban (11).

5. Structure déployable (10) selon l'une des revendications 3 ou 4, **caractérisée en ce qu'**il comprend en outre un moyen de verrouillage du degré de liberté en rotation autour de l'axe Z du bras (15).

6. Structure déployable (10) selon la revendication 5, **caractérisée en ce que** le moyen de verrouillage du degré de liberté en rotation autour de l'axe Z est un encastrement d'une portion de mètre-ruban (11) dans l'arbre (14).

7. Structure déployable (10) selon l'une des revendications 5 ou 6, le bras (15) comportant deux extrémités (91, 92) et le mandrin (13) comportant deux extrémités, **caractérisée en ce qu'**elle comprend deux mètres-ruban secondaires (61, 62) comportant chacun deux extrémités (71, 72, 73, 74), une première extrémité (71, 73) d'un des deux mètres-ruban secondaires (61, 62) est fixée à distance d'une première extrémité (81) du mètre-ruban (11) et **en ce qu'**une seconde extrémité (72, 74) du mètre-ruban secondaire (61, 62) est fixée à une extrémité (91, 92) du mandrin (13).

8. Structure déployable (10) selon la revendication 7, **caractérisée en ce que** les mètres-ruban secondaires (61, 62) sont des lames planes.

9. Structure déployable (10) selon l'une des revendications précédentes, **caractérisée en ce qu'**elle comprend en outre un mât articulé (110) déployable fixé sur une plateforme d'un satellite (100) par l'intermédiaire d'un moteur d'entraînement en rotation.

10. Satellite (100) **caractérisé en ce qu'**il comprend au moins une structure déployable (10) selon la revendication précédente.

## Patentansprüche

1. Entfaltbare Struktur (10), Folgendes beinhaltend:
• eine Stütze (16),
• ein an der Stütze (16) befestigtes Maßband (11, 12), welches geeignet ist, von einer um eine Achse Z eingerollten Konfiguration in eine entfaltete Konfiguration überzugehen, wobei das Maßband zwei Enden (81, 82) besitzt,
**dadurch gekennzeichnet, dass** sie zudem Folgendes beinhaltet
einen in Bezug auf die Stütze (16) um die Achse Z drehbar beweglichen Arm (15), welcher geeignet ist, einen ersten Kontakt mit dem Maßband (11, 12) zu bilden, um so die Entfaltung des Maßbandes (11, 12) zu steuern, dadurch, dass das Maßband (11, 12) zwischen seinen beiden Enden an einem Befestigungspunkt an der Stütze (16) befestigt ist,
dadurch, dass der Arm (15) geeignet ist, einen zweiten Kontakt mit dem Maßband (11, 12) zu bilden, um so die Entfaltung des Maßbandes (11, 12) zu steuern,
dadurch, dass ein erstes Ende geeignet ist, sich in Bezug auf den Befestigungspunkten entlang einer ersten Achse, welche rechtwinklig zur Achse Z ist, in eine erste Richtung zu entfalten,
dadurch, dass ein zweites Ende geeignet ist, sich entlang einer zweiten Achse, welche rechtwinklig zur Achse Z ist, in eine zweite Richtung zu entfalten, welche sich von der ersten Richtung unterscheidet,
und dadurch, dass die beiden Enden geeignet sind, sich gleichzeitig zu entfalten.

2. Entfaltbare Struktur (10) nach dem vorhergehenden Anspruch, **dadurch gekennzeichnet, dass** sie zudem einen Dorn (13) und eine Welle (14) beinhaltet, welche im Wesentlichen parallel zur Achse Z ist, und dadurch, dass der Dorn (13) an der Welle (14) befestigt ist und dadurch, dass das Maßband (11, 12) um den Dorn (13) aufgerollt ist.

3. Entfaltbare Struktur (10) nach einem der vorhergehenden Ansprüche, **dadurch gekennzeichnet, dass** der Arm (15) zwei Rollen (20, 21) trägt, wobei die Rollen in Kontakt mit dem Maßband (11) sind und **dadurch gekennzeichnet, dass** die Rollen (20, 21) geeignet sind, das Maßband (11) zu führen.

4. Entfaltbare Struktur (10) nach Anspruch 3, **dadurch gekennzeichnet, dass** die Rollen (20, 21) Heizrollen sind, und dadurch, dass die Rollen (20, 21) in der Lage sind, das Maßband (11) lokal zu erwärmen.

5. Entfaltbare Struktur (10) nach einem der Ansprüche 3 oder 4, **dadurch gekennzeichnet, dass** sie zudem ein Verriegelungsmittel des Drehfreiheitsgrades um die Achse Z des Arms (15) beinhaltet.

6. Entfaltbare Struktur (10) nach Anspruch 5, **dadurch gekennzeichnet, dass** das Verriegelungsmittel des Drehfreiheitsgrades um die Achse Z eine Einbettung eines Abschnittes des Maßbandes (11) in der Welle (14) ist.

7. Entfaltbare Struktur (10) nach einem der Ansprüche 5 oder 6, wobei der Arm (15) zwei Enden (91, 92) beinhaltet und der Dorn (13) zwei Enden beinhaltet, **dadurch gekennzeichnet, dass** sie zwei sekundäre Maßbänder (61, 62) beinhaltet, welche jeweils zwei Enden (71, 72, 73, 74) beinhalten, wobei ein erstes Ende (71, 73) eines der beiden sekundären Maßbänder (61, 62) in einem Abstand von einem ersten Ende (81) des Maßbandes (11) befestigt ist und dadurch, dass ein zweites Ende (72, 74) des sekundären Maßbandes (61, 62) an einem Ende (91, 92) des Dorns (13) befestigt ist.

8. Entfaltbare Struktur (10) nach Anspruch 7, **dadurch gekennzeichnet, dass** sie sekundären Maßbänder (61, 62) ebene Blätter sind.

9. Entfaltbare Struktur (10) nach einem der vorhergehenden Ansprüche, **dadurch gekennzeichnet, dass** sie zudem einen entfaltbaren gelenkigen Mast (110) beinhaltet, welcher an einer Plattform eines Satelliten (100) in Vermittlung eines Drehantriebsmotors befestigt ist.

10. Satellit (100), **dadurch gekennzeichnet, dass** er mindestens eine entfaltbare Struktur (10) nach dem vorhergehenden Anspruch beinhaltet.

## Claims

1. Deployable structure (10) comprising:
• a support (16),
• a tape spring (11, 12) fixed to the support (16), able to switch from a wound configuration about an axis Z, to a deployed configuration, the tape spring having two ends (81, 82),
**characterized in that** it further comprises
an arm (15) rotatably mounted with respect to the support (16) about the Z-axis, able to form a first contact with the tape spring (11, 12) so as to control the deployment of the tape spring (11, 12), **in that** the tape spring (11, 12) is fixed between its two ends to a fixing point on the support (16),
**in that** the arm (15) is able to form a second contact with the tape spring (11, 12) so as to control the deployment of the tape spring (11, 12),
**in that** a first end is able to deploy with respect to the fixing point along a first axis perpendicular to the Z axis in a first direction,
and **in that** a second end is able to unfold along a second axis perpendicular to the Z axis in a second direction different from the first direction,
and **in that** both ends are able to deploy simultaneously.

2. Deployable structure (10) according to the preceding claim, **characterized in that** it further comprises a mandrel (13) and a shaft (14) substantially parallel to the Z-axis, **in that** the mandrel (13) is fixed on the shaft (14), and **in that** the tape spring (11, 12) is wound around the mandrel (13).

3. Deployable structure (10) according to one of the preceding claims, **characterized in that** the arm (15) bears two rollers (20, 21), the rollers being in contact with the tape spring (11) and **in that** the rollers (20, 21) are able to guide the tape spring (11).

4. Deployable structure (10) according to claim 3, **characterized in that** the rollers (20, 21) are heating rollers, and **in that** the rollers (20, 21) are able to locally heat the tape spring (11).

5. Deployable structure (10) according to one of claims 3 or 4, **characterized in that** it further comprises a locking means for locking the degree of freedom of rotation about the Z axis of the arm (15).

6. Deployable structure (10) according to claim 5, **characterized in that** the locking means for locking the degree of freedom of rotation about the Z axis is the embedding of a portion of the tape spring (11) into the shaft (14).

7. Deployable structure (10) according to one of claims 5 and 6, the arm (15) comprising two ends (91, 92) and the mandrel (13) comprising two ends, **characterized in that** the structure comprises two secondary tape springs (61, 62) each one comprising two ends (71, 72, 73, 74), a first end (71, 73) of one of the two secondary tape springs (61, 62) is fixed some distance away from a first end (81) of the tape spring (11) and **in that** a second end (72, 74) of the secondary tape spring (61, 62) is fixed to one end (91, 92) of the mandrel (13).

8. Deployable structure (10) according to Claim 7, **characterized in that** the secondary tape springs (61, 62) are flat blades.

9. Deployable structure (10) according to one of the preceding claims, **characterized in that** it further comprises a deployable articulated mast (110) fixed on a platform of a satellite (100) via a rotation-drive motor.

10. Satellite (100) **characterized in that** it comprises at least one deployable structure (10) according to the preceding claim.
